# EUROPEAN PATENT APPLICATION

(11) **EP 1 084 922 A2**
(43) Date of publication of application: **21.03.2001**
(21) Application number: 00117259.2
(22) Date of filing: 16.08.2000
(51) Int. Cl.: B60T 8/18, B60T 8/26, B60T 13/66

(54) **Brake system for a railway freight train**

(30) Priority: 20.09.1999 US 399412
(71) Applicant: Westinghouse Air Brake Company, Wilmerding, Pennsylvania 15148 (US)
(72) Inventor: Ring, Michael E., Crown Point, Indiana 46307 (US)
(74) Representative: Petri, Stellan

(57) **Abstract**

A method of substantially achieving a minimum stopping distance of a freight train consist without incurring any significant detrimental wheel slide comprising the steps of preprogramming preselected information into a computer disposed on a freight locomotive and determining a speed of such freight train consist. Then communicating a signal that is indicative of said speed determined to such computer disposed on such freight locomotive. Determining in such computer a pressure that can be applied to brake cylinders which will maintain substantially maximum adhesion between wheels being braked and rail surfaces in contact with such wheels and communicating a signal representative of such pressure determined to a pressure control valve in fluid communication with such brake cylinders and, thereafter, maintaining a maximum pressure on such brake cylinders that will stop such train consist in a shortest possible distance while simultaneously substantially preventing wheel slide.

## Description

### FIELD OF THE INVENTION

The present invention relates, in general, to the normal stopping distance that is required during a brake application on a braking arrangement utilized on a railway type freight car and, more particularly, this invention relates to both a method of and an apparatus for substantially minimizing the normal stopping distance required for a freight train consist during such brake application and, still more specifically, this invention relates to such a method of and an apparatus for substantially minimizing the normal stopping distance required during a brake application for a freight train consist that is equipped with a present day state of the art electrically controlled pneumatic (ECP) type braking arrangement.

### BACKGROUND OF THE INVENTION

As is generally well recognized in the railroad industry today, due to both the increased length of freight train consists that are presently being used and the ability of these freight trains to haul substantially heavier loads it, has become even more important for such trains to possess the capability of stopping in as short a distance as possible. To this end, as is also quite well known in the railroad industry, today's modern freight train will normally be equipped with an electro-pneumatic type braking system in order to significantly decrease the stopping distance required and to improve the overall braking efficiency of such train.

The above-mentioned and recently developed electro-pneumatic braking systems for such railway freight cars are designed to make better use of the increased speed that a brake control signal can be transmitted throughout the length of the train consist. As is known in the art, such brake control signal can be transmitted either electrically, over a trainline, or as a radio frequency (RF) type control signal.

In either case, however, these brake control signals are transmitted to at least one electro-pneumatic type valve that is disposed on each freight car in a train consist in order to rapidly exhaust air from the brake pipe and, therefore, begin either a full service or an emergency brake application more quickly throughout the length of the train consist through the application of the requisite air pressure to the brake cylinders disposed on each car throughout the train consist.

Since their introduction to the railroad industry, numerous improvements have been made in these electro-pneumatic railway braking systems and there are additional improvements that are still under research and being developed by a number of railway freight car brake system manufacturers, including the assignee of the present invention.

For example, the assignee of the present invention has been working rather closely with a freight car builder, located in Great Britain, to further develop the relatively inexpensive braking technology presently being used on freight cars in the United States for use in Europe. This development work has led to some truck mounted braking system design changes which are disclosed in a co-pending patent application titled, "Suspension System For A Car Mounted Brake Assembly" filed on and assigned Serial Number . This co-pending patent application has been assigned to the assignee of the present invention and the teachings therein are incorporated herein by reference thereto. It is expected that these design changes should prove useful in the US also.

Additionally, in order to achieve the desired improvement of requiring shorter distances in freight car braking the railroad industry is, to the extent possible, making use of coupling arrangements which are designed to have a minimum or, preferably, no slack. These slackless type coupling arrangements are presently being used extensively in the United States on those railway freight cars which are in dedicated type service and normally will only require uncoupling for periodic routine type maintenance and/or repair.

Further desirable freight car braking improvements are being sought, by the railroad industry, through the use of an improved brake shoe design and/or improving the composition of such brake shoes.

### SUMMARY OF THE INVENTION

In a first aspect the present invention provides a method of significantly enhancing the brake performance of a brake system disposed on a freight train. Such method includes the steps of preprogramming preselected information into a computer disposed on a freight locomotive. The method further includes determining a speed of such freight train consist and communicating a signal that is indicative of such speed determined to such computer. Additionally, the method includes the step of determining in such computer a pressure that can be applied to brake cylinders which will maintain substantially maximum adhesion between wheels being braked and rail surfaces in contact with such wheels and communicating a signal representative of such pressure determined to a pressure control valve in fluid communication with such brake cylinders. Thereafter maintaining a maximum pressure on such brake cylinders that will stop such train consist in a shortest possible distance while simultaneously substantially preventing wheel slide.

According to a second aspect, this invention provides an apparatus for minimizing the stopping distance of a freight train. Such apparatus for minimizing the stopping distance of a freight train comprises a program having preselected information inputted into a computer disposed on a freight locomotive. The apparatus further includes a speed sensing means disposed on at least one of such locomotive and a freight car for determining a speed of such freight train consist and a means connected to such speed sensing means for communicating a signal that is indicative of the speed to such computer, so that such program can determine a pressure that can be applied to brake cylinders which will maintain substantially maximum adhesion between wheels being braked and rail surfaces in contact with such wheels. The final essential element of the apparatus is a means connected to such computer for communicating a signal representative of such pressure determined by the program to a pressure control valve disposed in fluid communication with such brake cylinders and maintaining a maximum pressure on such brake cylinders that will stop such train consist in a shortest possible distance while simultaneously substantially preventing wheel slide.

### OBJECTS OF THE INVENTION

It is, therefore, one of the primary objects of the present invention to provide a method of enhancing the braking efficiency of a train consist which can be implemented at a relatively low cost.

Another object of the present invention is to provide an apparatus for enhancing the braking efficiency of a train consist which can be implemented at a relatively low cost by utilizing the equipment already present on electronically controlled railway braking systems.

Still another object of the present invention is to provide a method of and an apparatus for enhancing the braking efficiency of a train consist which will significantly reduce the wheel slip while simultaneously maximizing the desired adhesion between the wheel and rail.

Yet another object of the present invention is to provide a method of and an apparatus for enhancing the braking efficiency of a train consist which will be cost effective to implement.

A further object of the present invention is to provide a method of and an apparatus for enhancing the braking efficiency of a train consist which will incorporate feedback control to provide optimum control of the braking system.

It is an additional object of the present invention to provide a method of and an apparatus for enhancing the braking efficiency of a train consist which can utilize pre-programmed adhesion curves as a retardation limit.

Still yet another object of the present invention is to provide a method of and an apparatus for enhancing the braking efficiency of a train consist which can utilize pre-programmed adhesion curves to compensate for brake shoe coefficient fade during a brake application.

In addition to the objects and advantages of the invention which have set out in some detail above, various other objects and advantages of the method and apparatus for enhancing the braking efficiency of a train consist will become more readily apparent to those persons skilled in the relevant art from the following more detailed description of the invention, particularly, when such detailed description is taken in conjunction with the attached drawing figures and with the appended claims.

### BRIEF DESCRIPTION OF THE DRAWINGS

Figure 1 is a graph illustrating a US Full Service / 286K / 13.0% Net Brake Ratio (NBR) Theoretical Single Car Stop / Level Grade;
Figure 2 is a graph illustrating a US Full Service / 52,260 Lt. Wt. / 38.0% Net Brake Ratio (NBR) Theoretical Single Car Stop / Level Grade;
Figure 3 is a graph illustrating standard adhesion curves for different rail conditions;

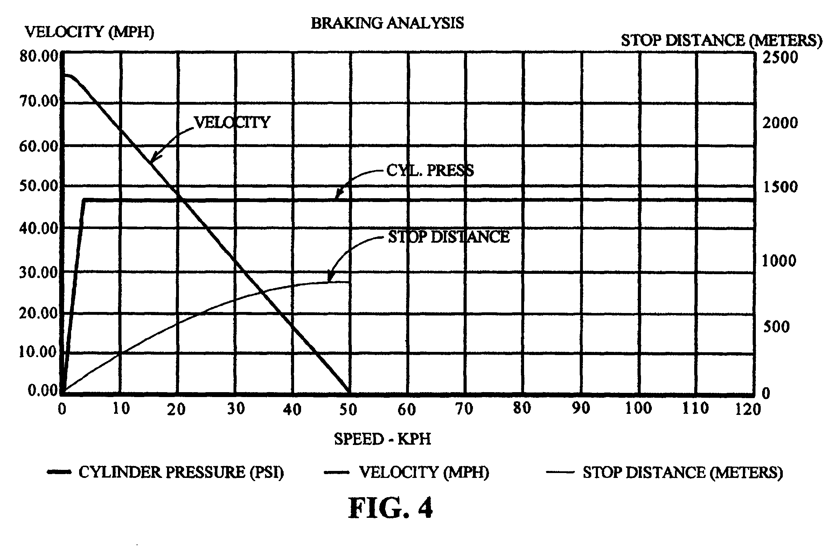

Figure 4 is a graph illustrating a braking analysis for the present invention; and

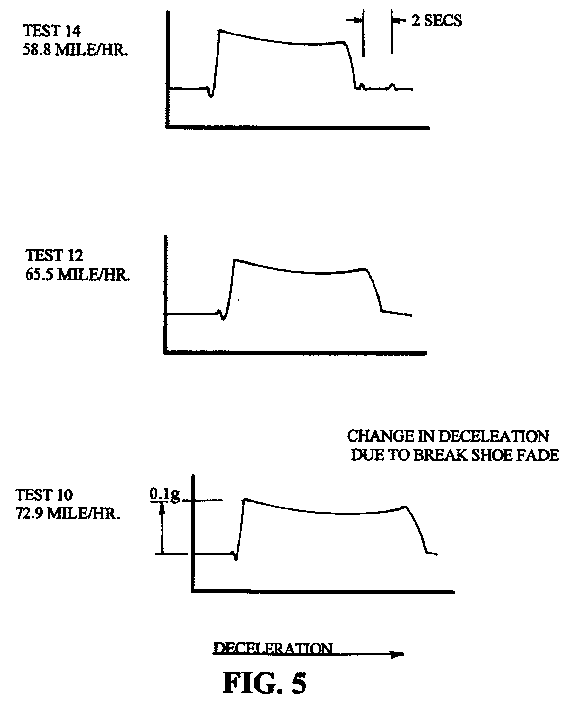

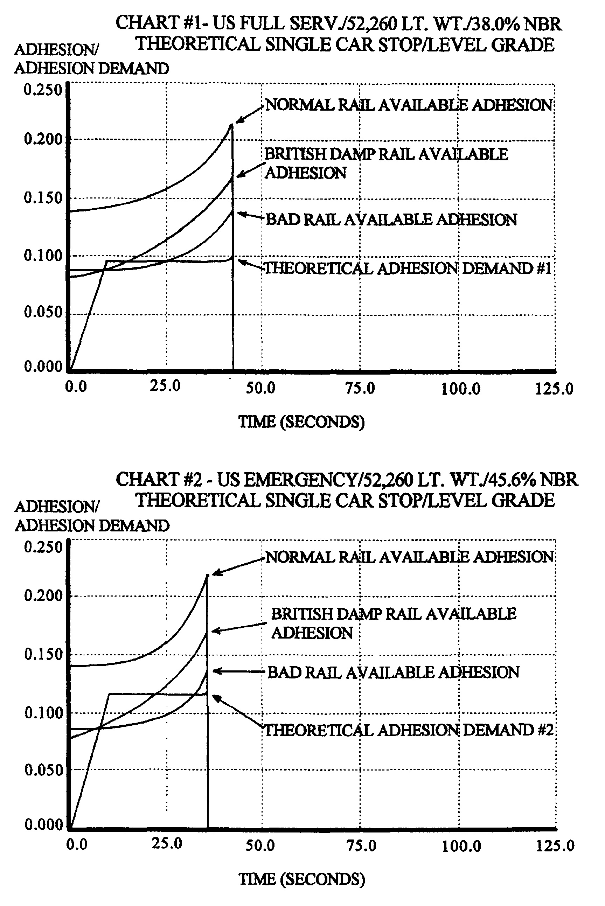

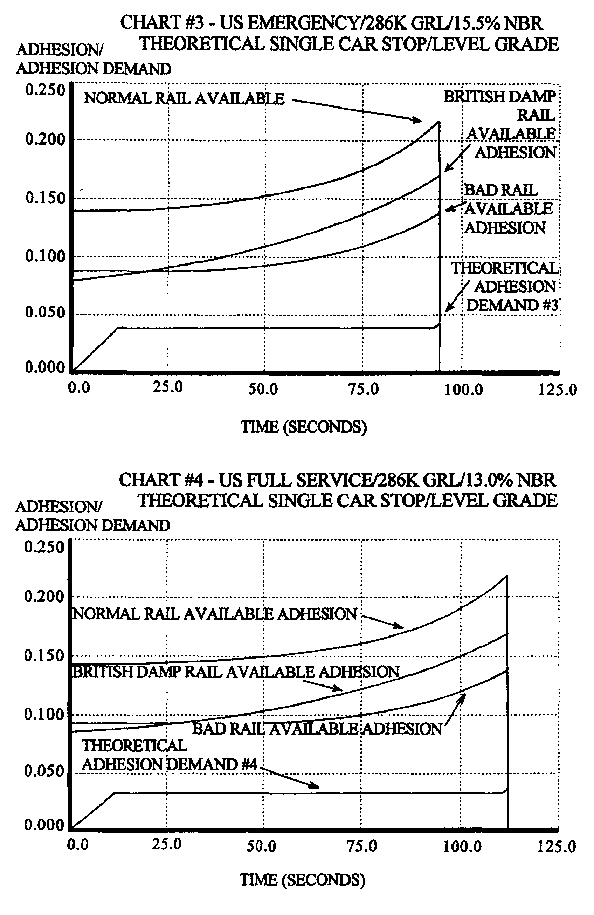

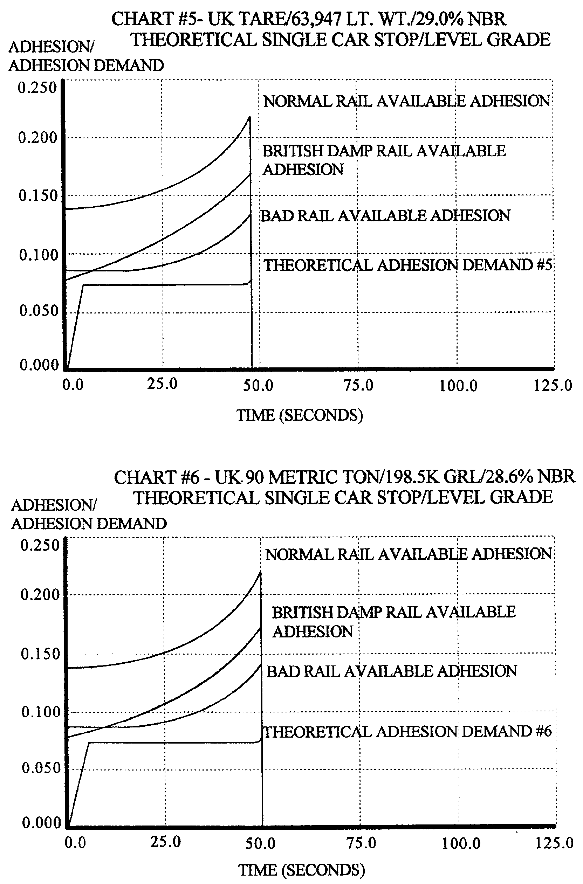

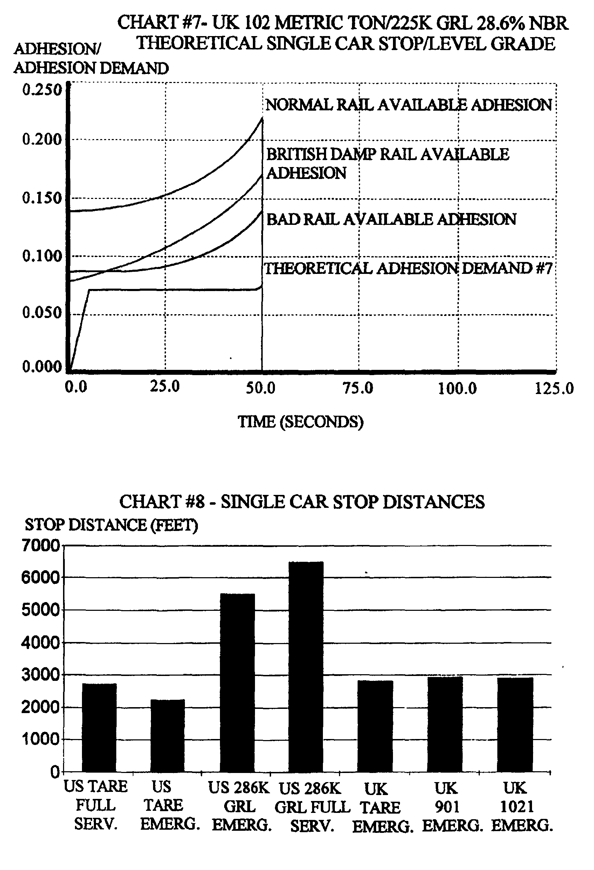

Figure 5 is a printout of a series of tests conducted at different speeds which illustrate the change in deceleration due to brake shoe fade.

### BRIEF DESCRIPTION OF A PRESENTLY PREFERRED AND VARIOUS ALTERNATIVE EMBODIMENTS OF THE INVENTION

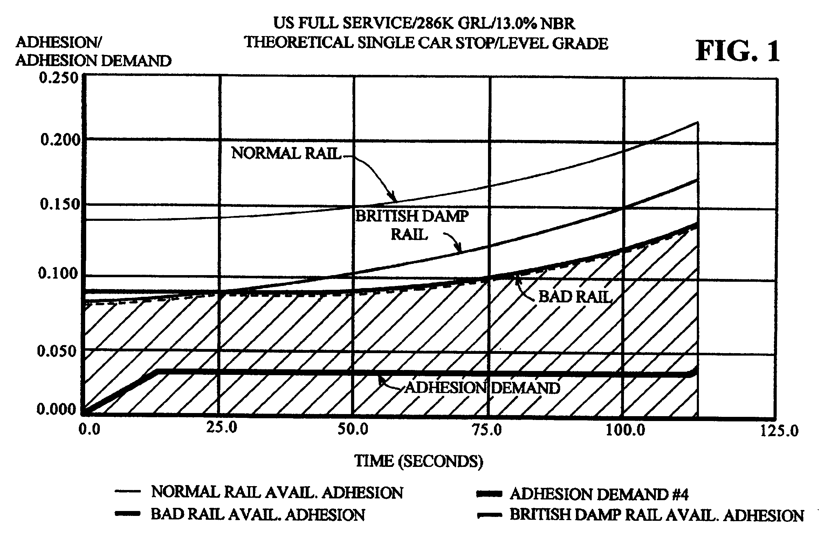

Reference is now directed, more particularly, to Figure 1. Illustrated therein is a graph showing adhesion/adhesion demand with respect to time in seconds for various types of rail that can be encountered and for a full service / 286K GRL / 13.0% NBR theoretical single car stop on a level grade.

As can be seen in Figure 1, according to a presently preferred embodiment of the invention, the shortest stopping distance without incurring any significant detrimental wheel slide will normally occur by taking full advantage of the area under the adhesion curves for a particular retardation force/car weight adhesion demand.

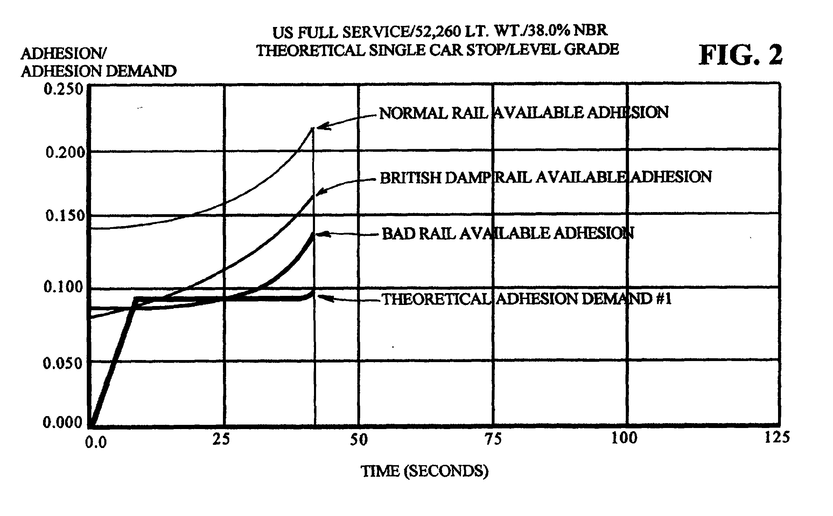

Figure 2 is similar to Figure 1 and illustrates the adhesion/adhesion demand with respect to time in seconds for various types of rail that can be encountered and for a full service / 52,260 Lt. Wt. / 38.0% NBR theoretical single car stop on a level grade.

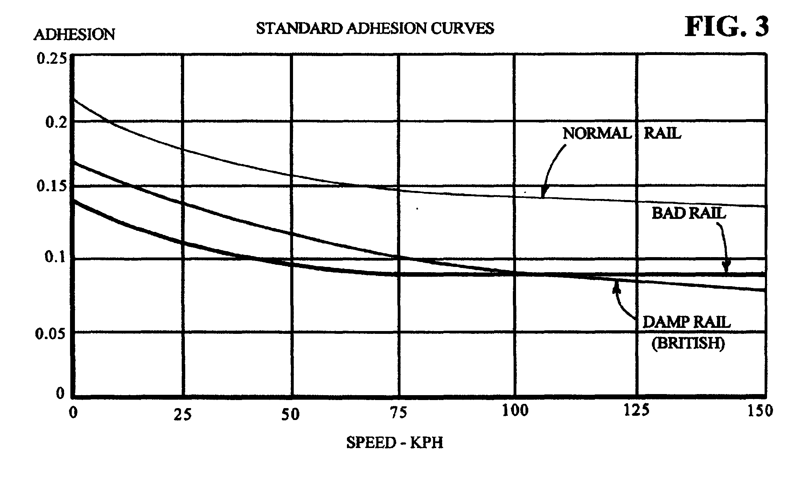

Illustrated in Figure 3 is a graph of standard adhesion curves for different rail conditions programmed into a computer disposed on a locomotive. These standard adhesion curves are useful in carrying out the presently preferred embodiments of the invention.

According to the invention a method is provided that will substantially achieve a minimum stopping distance of a freight train consist without incurring any significant detrimental wheel slide. Such method comprising the steps of preprogramming preselected information into a computer disposed on a freight locomotive and determining a speed of such freight train consist. A signal that is indicative of said speed determined is communicated to such computer disposed on such freight locomotive. Thereafter, determining in such computer a pressure that can be applied to brake cylinders which will maintain substantially maximum adhesion between wheels being braked and rail surfaces in contact with such wheels. Then, communicating a signal representative of such pressure determined to a pressure control valve in fluid communication with such brake cylinders and maintaining a maximum pressure on such brake cylinders that will stop such train consist in a shortest possible distance while simultaneously substantially preventing wheel slide.

In the presently preferred embodiment of the invention, the method includes an additional step of providing preselected feedback information to such computer.

The preselected information programmed into such computer disposed on a freight locomotive include a length of such train consist and such method includes an additional step of using the length in maintaining a maximum pressure on such brake cylinders that will stop such train consist in a shortest possible distance while simultaneously substantially preventing wheel slide.

Also, the preselected information programmed into such computer disposed on a freight locomotive may include a velocity dependence of wheel to rail adhesion and such method includes an additional step of using the velocity dependence of wheel to rail adhesion in maintaining a maximum pressure on such brake cylinders that will stop such train consist in a shortest possible distance while simultaneously substantially preventing wheel slide.

Such preselected information programmed into such computer disposed on a freight locomotive may further include a weight of at least such train consist and the method includes an additional step of using the weight in maintaining a maximum pressure on such brake cylinders that will stop such train consist in a shortest possible distance while simultaneously substantially preventing wheel slide.

Alternatively, the preselected information programmed into such computer disposed on a freight locomotive may include a weight of each car disposed in such train consist and the method includes an additional step of using the weight of such each car in maintaining a maximum pressure on such brake cylinders that will stop such train consist in a shortest possible distance while simultaneously substantially preventing wheel slide.

The signal that is indicative of said speed is one of an electrical signal and a radio signal communicated to such computer disposed on such freight locomotive and the signal representative of such pressure is one of an electrical signal and a radio signal communicated to such pressure control valve disposed in fluid communication with such brake cylinders.

The present invention further provides an apparatus for substantially achieving a minimum stopping distance of a freight train consist without incurring any significant detrimental wheel slide. The apparatus comprises a program having preselected information disposed in a computer located on a freight locomotive and a speed sensing means disposed on at least one of such locomotive and a freight car for determining a speed of such freight train consist.

There is a means connected to such speed sensing means for communicating a signal that is indicative of the speed to such computer disposed on such freight locomotive, so that such program can determine a pressure that can be applied to brake cylinders which will maintain substantially maximum adhesion between wheels being braked and rail surfaces in contact with such wheels and a means connected to such computer for communicating a signal representative of such pressure determined by said program to a pressure control valve disposed in fluid communication with such brake cylinders and maintaining a maximum pressure on such brake cylinders that will stop such train consist in a shortest possible distance while simultaneously substantially preventing wheel slide.

In one embodiment of the invention such means connected to the speed sensing means for communicating the signal that is indicative of such speed to such computer is a wire and the means connected to such computer for communicating a signal representative of such pressure determined by the program to such pressure control valve is also a wire.

Alternatively, the means connected to such speed sensing means for communicating the signal that is indicative of such speed to such computer is a radio transmitter and such means connected to such computer for communicating a signal representative of such pressure determined by such program to such pressure control valve is also a radio transmitter.

In addition, preferably, the apparatus further includes a means disposed on such train consist for determining a weight of such train consist and a means, such as a keyboard, disposed on such train consist for inputting information into such computer disposed on such locomotive.

In order to more readily understand the present invention, a comparison will now be presented that describes the theoretical differences in braking performance of a train consist between the United States and Great Britain. This comparison will demonstrate the stop distance performance as well adhesion vs. adhesion demand between the wheel-rail interface.

The performance of the British style brake systems have a tendency to be more conservative, when addressing adhesion concerns in the light car condition than the US and they tend to utilize the brakes in a much more demanding way in the loaded car condition. The data to be presented hereinafter has been calibrated to actual performance in the field for the British equipment and then extrapolated to show comparative data for typical US equipment. The calibration is simply an adjustment in average brake block coefficient for a particular set of braking conditions.

### Conditions for analysis:

| US Freight | |
|---|---|
| Cylinder Build-up time: | 12 Seconds |
| Full Service Cylinder Pressure: | 65 psi |
| Emergency Cylinder Pressure: | 78 psi |

| UK Freight | |
|---|---|
| Cylinder Build-up time: | 4 Seconds |
| Full Service Cylinder Pressure: | 54 psi |
| Emergency Cylinder Pressure: | 54 psi |

| | |
|---|---|
| *note - Full service and emergency use the same cylinder pressure and same brake block force for UK analysis. | |

Both US and British data assume level grade and a single car stop from a 75 MPH initial velocity. The available adhesion curves, shown in the following charts, were derived from the typical curves shown in the "Engineering and Design of Railway Brake Systems" book published by The Air Brake Association. These adhesion curves have been altered to show available adhesion with respect to time and velocity of the stopping freight car.

The following charts show the theoretical design differences in available adhesion and adhesion demand of these brake systems. Adhesion demand is "purely theoretical", with no effects of variation in brake block friction shown, due to thermal effects or other environmental conditions. These effects have been averaged into the brake block coefficient used for the stop analyses. However, the analyses' demonstrate the brake system design differences clearly.

### Chart Descriptions

**Chart #1** - US Full Service Brake Application/52.3K Lt. Wt./38.0% NBR (net brake ratio).
**Chart #2** - US Emergency Brake Application/52.3K Lt. Wt./45.6% NBR
**Chart #3** - US Emergency Brake Application/286K GRL/15.5% NBR
**Chart #4** - US Full Service Brake Application/286K GRL/13.0% NBR
**Chart #5** - UK Full Service/Emergency Brake Application/63.9K Lt. Wt./29.0% NBR
**Chart #6** - UK Full Service/Emergency Brake Application/90 metric ton (198.5K GRL)/28.6% NBR
**Chart #7** - UK Full Service/Emergency Brake Application/102 metric ton (225K GRL)/28.6% NBR
**Chart #8** - Resulting stop distances for the above seven single car stop cases.

As is clearly shown, the shortest stop distances, without sliding wheels, will occur by properly decelerating the car to best utilize the area under the adhesion curves shown in charts 1-7. Chart #1 shows that at an allowable 38% net brake ratio, the US system has entered the potential wheel slide area of the adhesion curves for bad rail. Chart #2 shows that the same car, under an emergency brake application, can achieve a 45.6% net brake ratio that increases the potential for wheel slide even more. Chart #3 and chart #4 show how much more braking we could do in order to stop the car in a shorter distance, without risking wheel slide, in the loaded condition with both full service and emergency brake applications.

The British systems, shown in charts 5, 6, and 7, have all been set up to stay beneath the adhesion curves and provide the same braking performance whether in light weight, partially loaded, or loaded conditions. Comparing all of the typical stop distances for these particular seven cases, chart #8 shows the US loaded stop distances are up to twice the distance of the British configurations.

Although a point has been made that British brake performance can attain safer and shorter stops based on single car stop predictions and field results, the differences in train operations has not yet been discussed. There are many differences in the way freight braking is handled in both countries, thus causing the brake systems to be designed as they exist today. One of the main differences is the length of the trains and how in-train dynamic slack action is controlled. Britain has a tendency to operate shorter trains and make use of buffers between the cars to control dynamic slack action. Buffers function to keep the train in more of a "stretched" condition by continuously pushing the cars apart from one another. The US, on the other hand, has a tendency to operate longer trains and use draft gear to control dynamic slack action. The draft gear typically forces the cars to a neutral position and controls slack energy in both "bunched" and "stretched" conditions. The only exceptions to this are the more wide spread use of articulated connectors and slackless drawbars. These units eliminate slack in their connections and thus severely reduce dynamic slack action and the need to control it.

Grade braking and wheel tread temperatures need to also be considered when dissipating the energy of a moving freight car. Not only do we operate longer trains here in the US, but they are also an average 27% heavier gross rail load than the British freight cars (286K vs 225K GRL). In the US, dynamic braking is the preferred method of train control. The British system tends to use the power brakes more often and can do more of this type of braking due to their lighter freight cars and less kinetic energy. Braking heavier cars on grades can generate detrimental wheel tread temperatures if the shoe force and friction are too high for extended periods of time during the stopping or speed reduction event. The simulations above for the British 198.5K GRL stop raised the wheel temperature approximately 140° F during the estimated 50 second stop test.

The British brake equipment, used in these examples, consists of a modified WABCO TMX® truck mounted brake. The modifications consist of a larger 12 inch diameter brake cylinder, custom levers, 12° end extensions on the brake beams and brake shoes of a special composite material. This equipment and brake shoe material helped to achieve the presented stop distances. The brake shoe forces were in the neighborhood of 9,000 pounds per shoe, at full application. Having a brake shoe material with sufficient friction, that has minimal fade at high energy levels and being able to mechanically apply high brake shoe forces are key in attaining the demonstrated performance.

It is also important to note that even shoe forces are very important when dissipating large amounts of energy. By evenly distributing the energy to all wheels, the chances of damaging any one wheel or wheel set is minimized. This helps not to slide any one axle set and shares the necessary retardation forces to minimize variation in wheel temperatures. This becomes a critical point when attempting to improve stopping performance through the application of higher mechanical shoe forces.

The mechanical design modifications according to the present invention offer great performance benefits when integrated into ECP brake systems. Stop distances of entire trains can be reduced by virtually simultaneous application of the brakes throughout the train. Slack and in train forces can be regulated by controlling brake applications in different portions of the train in conjunction with draft gear or slackless coupling systems.

Electronic braking can be used to improve the performance of brake systems, especially in the area of velocity dependent retarding forces. Charts 1 through 7 previously discussed, demonstrate the velocity dependence of wheel to rail adhesion during the braking event. With electronics controlling the brake shoe forces, and therefore the retarding forces, a speed signal would be all that was necessary to help utilize the full amount of available adhesion without sliding the wheels. This physical concept coupled with creative programming of ECP equipment provides higher performance braking than we have ever seen before.

According to the present invention, another possibility for the application of ECP intelligence is in the real time correction of the varying coefficient of friction, between the brake shoe and the wheel, that occurs during a stop. As the car's rate of deceleration changes, the intelligent ECP system makes retardation force adjustments, through changes in brake cylinder pressure, in order to optimize the stopping performance.

While both a presently preferred and various alternative embodiments of the instant invention have been described above, it should be noted that other modifications and alternative arrangements may be envisioned by those persons skilled in the art without departing from either the spirit of the invention or the scope of the appended claims.

## Claims

1. A method of substantially achieving a minimum stopping distance of a freight train consist without incurring any significant detrimental wheel slide, said method comprising the steps of:
(a) preprogramming preselected information into a computer disposed on a freight locomotive;
(b) determining a speed of such freight train consist;
(c) communicating a signal that is indicative of said speed determined in step (b) to such computer disposed on such freight locomotive;
(d) determining in such computer a pressure that can be applied to brake cylinders which will maintain substantially maximum adhesion between wheels being braked and rail surfaces in contact with such wheels;
(e) communicating a signal representative of such pressure determined in step (d) to a pressure control valve in fluid communication with such brake cylinders; and
(f) maintaining a maximum pressure on such brake cylinders that will stop such train consist in a shortest possible distance while simultaneously substantially preventing wheel slide.

2. A method of substantially achieving a minimum stopping distance of a freight train consist, according to claim 1, wherein said method includes an additional step of providing preselected feedback information to such computer.

3. A method of substantially achieving a minimum stopping distance of a freight train consist, according to claim 1, wherein said preselected information programmed into such computer disposed on a freight locomotive, in step (a), includes a length of such train consist and said method includes an additional step of using said length in maintaining a maximum pressure on such brake cylinders that will stop such train consist in a shortest possible distance while simultaneously substantially preventing wheel slide.

4. A method of substantially achieving a minimum stopping distance of a freight train consist, according to claim 1, wherein said preselected information programmed into such computer disposed on a freight locomotive, in step (a), includes a velocity dependence of wheel to rail adhesion and said method includes an additional step of using said velocity dependence of wheel to rail adhesion in maintaining a maximum pressure on such brake cylinders that will stop such train consist in a shortest possible distance while simultaneously substantially preventing wheel slide.

5. A method of substantially achieving a minimum stopping distance of a freight train consist, according to claim 1, wherein said preselected information programmed into such computer disposed on a freight locomotive, in step (a), includes a weight of at least such train consist and said method includes an additional step of using said weight in maintaining a maximum pressure on such brake cylinders that will stop such train consist in a shortest possible distance while simultaneously substantially preventing wheel slide.

6. A method of substantially achieving a minimum stopping distance of a freight train consist, according to claim 5, wherein said preselected information programmed into such computer disposed on a freight locomotive, in step (a), includes a weight of each car disposed in such train consist and said method includes an additional step of using said weight of said each car in maintaining a maximum pressure on such brake cylinders that will stop such train consist in a shortest possible distance while simultaneously substantially preventing wheel slide.

7. A method of substantially achieving a minimum stopping distance of a freight train consist, according to claim 1, wherein said signal that is indicative of said speed determined in step (b) is an electrical signal communicated to such computer disposed on such freight locomotive.

8. A method of substantially achieving a minimum stopping distance of a freight train consist, according to claim 1, wherein said signal representative of such pressure determined in step (d) is an electrical signal communicated to such pressure control valve disposed in fluid communication with such brake cylinders.

9. A method of substantially achieving a minimum stopping distance of a freight train consist, according to claim 1, wherein at least one of said signals communicated in steps (c and e) is communicated as a radio signal.

10. A method of substantially achieving a minimum stopping distance of a freight train consist, according to claim 9, wherein each of said signals communicated in steps (c and e) is communicated as a radio signal.

11. An apparatus for substantially achieving a minimum stopping distance of a freight train consist without incurring any significant detrimental wheel slide, said apparatus comprising:
(a) a program having preselected information disposed in a computer disposed on a freight locomotive;
(b) a speed sensing means disposed on at least one of such locomotive and a freight car for determining a speed of such freight train consist;
(c) a means connected to said speed sensing means for communicating a signal that is indicative of said speed to such computer disposed on such freight locomotive, so that such program can determine a pressure that can be applied to brake cylinders which will maintain substantially maximum adhesion between wheels being braked and rail surfaces in contact with such wheels; and
(d) a means connected to such computer for communicating a signal representative of such pressure determined by said program to a pressure control valve disposed in fluid communication with such brake cylinders and maintaining a maximum pressure on such brake cylinders that will stop such train consist in a shortest possible distance while simultaneously substantially preventing wheel slide.

12. An apparatus for substantially achieving a minimum stopping distance of a train consist, according to claim 11, wherein said means connected to said speed sensing means for communicating said signal that is indicative of said speed to such computer is a wire.

13. An apparatus for substantially achieving a minimum stopping distance of a train consist, according to claim 11, wherein said means connected to such computer for communicating a signal representative of such pressure determined by said program to said pressure control valve is a wire.

14. An apparatus for substantially achieving a minimum stopping distance of a train consist, according to claim 11, wherein said means connected to said speed sensing means for communicating said signal that is indicative of said speed to such computer is a radio transmitter.

15. An apparatus for substantially achieving a minimum stopping distance of a train consist, according to claim 11, wherein said means connected to such computer for communicating a signal representative of such pressure determined by said program to said pressure control valve is a radio transmitter.

16. An apparatus for substantially achieving a minimum stopping distance of a train consist, according to claim 11, wherein said speed sensing means is disposed on said locomotive.

17. An apparatus for substantially achieving a minimum stopping distance of a train consist, according to claim 11, wherein said speed sensing means is disposed at least one freight car.

18. An apparatus for substantially achieving a minimum stopping distance of a train consist, according to claim 11, wherein said apparatus further includes a means disposed on such train consist for determining a weight of such train consist.

19. An apparatus for substantially achieving a minimum stopping distance of a train consist, according to claim 11, wherein said apparatus further includes a means disposed on such train consist for inputting information into such computer disposed on such locomotive.

20. An apparatus for substantially achieving a minimum stopping distance of a train consist, according to claim 11, wherein said means disposed on such train consist for inputting information into such computer is a keyboard.
